# EUROPEAN PATENT SPECIFICATION

(11) **EP 3 823 411 B1**
(45) Date of publication and mention of the grant of the patent: **25.01.2023**
(21) Application number: 19834170.3
(22) Date of filing: 09.07.2019
(51) Int. Cl.: H04W 4/50, H04W 76/19, H04W 76/15, H04W 80/02

(54) **CONTROL METHOD FOR USER EQUIPMENT, AND USER EQUIPMENT FOR MCG FAILURE PROCESSING**
STEUERUNGSVERFAHREN FÜR BENUTZERGERÄT SOWIE BENUTZERGERÄT ZUR MCG FEHLERBEHANDLUNG
PROCÉDÉ DE COMMANDE POUR UN ÉQUIPEMENT UTILISATEUR, ET ÉQUIPEMENT UTILISATEUR DE TRAITEMENT DE DÉFAILLANCE MCG

(30) Priority: 10.07.2018 CN 201810754064
(43) Date of publication of application: 19.05.2021
(73) Proprietor: Sharp Kabushiki Kaisha, Sakai City Osaka 590-8522 (JP); FG INNOVATION COMPANY LIMITED, Hong Kong (CN)
(72) Inventor: ZHANG, Chongming, Sakai City, Osaka 590-8522 (JP); LIU, Renmao, Sakai City, Osaka 590-8522 (JP); YAMADA, Shohei, Sakai City, Osaka 590-8522 (JP)
(74) Representative: Müller-Boré & Partner Patentanwälte PartG mbB
(86) International application number: PCT/CN2019/095232
(87) International publication number: WO 2020/011157

(56) References cited:
- CN-A- 104 219 787
- CN-A- 104 219 787
- CN-A- 105 917 716
- CN-A- 107 690 162
- US-A1- 2018 184 482
- ERICSSON: "MCG failure handling in case of NE-DC (TP to 37.340)", 3GPP DRAFT; R2-1809949 - MCG FAILURE HANDLING IN CASE OF NE-DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, Canada; 20180702 - 20180706 22 June 2018 (2018-06-22), XP051525771, Retrieved from the Internet: URL:http://www.3gpp.org/ftp/tsg%5Fran/WG2% 5FRL2/TSGR2%5FAHs/2018%5F07%5FNR/Docs/R2%2 D1809949%2Ezip [retrieved on 2018-06-22]
- ERICSSON: "RLM and RLF in case of LTE-NR tight interworking", 3GPP DRAFT; R2-1702711 - RLM AND RLF IN LTE-NR TIGHT INTERWORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Spokane, USA; 20170203 - 20170207 3 April 2017 (2017-04-03), XP051244704, Retrieved from the Internet: URL:http://www.3gpp.org/ftp/Meetings_3GPP_ SYNC/RAN2/Docs/ [retrieved on 2017-04-03]
- HUAWEI ET AL: "Discussion on MCG/SCG failure handling for NE-DC", 3GPP DRAFT; R2-1810704, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, Canada; 20180702 - 20180706 1 July 2018 (2018-07-01), XP051467833, Retrieved from the Internet: URL:http://www.3gpp.org/ftp/Meetings%5F3GP P%5FSYNC/RAN2/Docs [retrieved on 2018-07-01]
- LG ELECTRONICS INC: "Supplementary SRB in MCG failure for NR", 3GPP DRAFT; R2-1701639 SUPPLEMENTARY SRB FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051212233, Retrieved from the Internet: URL:http://www.3gpp.org/ftp/Meetings_3GPP_ SYNC/RAN2/Docs/ [retrieved on 2017-02-12]

## Description

### FIELD

The present disclosure generally relates to wireless communications, and more particularly, the present disclosure relates to a control method for user equipment and a user equipment.

### BACKGROUND

As mobile communication grows and its technology improves, the world is moving into a community that is a completely interconnected network and that is where anyone or anything can obtain information and share data at anytime and anywhere. To meet the requirements of enhanced Mobile Broadband (eMBB) and massive Machine-Type Communication (mMTC), the next-generation wireless communication technology (5G) is researching the possible enhancements in technology for users in dual connectivity to multi connectivity (RP-181469 New WID on DC and CA enhancements).

Dual connectivity or multi connectivity refers to a user equipment (UE) operating in connected status building physical channels with more than one network nodes, and realizing data transmission. The network nodes may include a Master Node (MN) and a Secondary Node (SN). The MN is executed by one Gnb/Enb/ng-eNB, and the serving cell group controlled by MN is called the Master Cell Group (MCG). Correspondingly, the SN is executed by one or more Gnb/Enb/ng-eNB, and the serving cell group controlled by SN is called the Secondary Cell Group (SCG).

The UE that is configured with dual connectivity or multi connectivity may communicate via MCG or SCG. In present mechanisms, when problems occurred in MCG link transmission, even though the UE is able to transmit normally via SCG, the UE still requires to trigger a RRC connection re-establishment procedure. With cell reselection mechanism, the UE selects suitable cell to perform link connection resume and simultaneously releases SCG that has been configured previously. The re-establishment procedure requires a period of time to run, and may fail and causes disconnection in UE transmission, which increases transmission delay.

To address the issues, the present mechanisms provide that when a failure occurred in a MCG link, if a SCG is able to operate normally, then the UE may report messages to the network side that the failure has occurred in the MCG via the SCG. Subsequently, the network side sends RRC reconfiguration message to the LTE via the SCG. The LTE may continue to operate upon reconfiguration, and, thereby, minimizes the effects of link disconnection.

In this implementation, the problem to be solved resides in how the UE process present bearings when a problem occurred in MCG transmission. Correspondingly, how to resume logic link transmission after the UE receives RRC reconfiguration message also needs to be addressed. Additionally, when the MCG transmission problems has occurred and before the UE receives the reconfiguration message, if a problem also occurred in the SCG link, how the UE operates also needs to be solved.

Ericsson, "MCG failure handling in case of NE-DC (TP to 37.340)", 3GPP TSG-RAN WG2 #AH1807, Montreal, Canada, 2 to 6 July 2018, 3GPP Tdoc R2-1809949, discusses MCG RLF handling for NE-DC, proposing UE suspends MCG transmissions and sends MCGFailureInformation if MCG RLF is detected when NE-DC is active and split SRB is configured. The document also proposes UE falls back to the RRC connection re-establishment procedure and does not report MCGFailureInformation to SCG in case of simultaneous or consecutive RLF detections on MCG and SCG.

### SUMMARY

The present disclosure proposes solutions to the following problems. The problems include: how the UE process present bearings when a problem occurred in MCG transmission; how to resume logic link transmission after the UE receives RRC reconfiguration message; and when the MCG transmission problems has occurred and before the UE receives reconfiguration message, if a problem also occurred in the SCG link, how the UE operates.

The above and other problems are solved by a control method for user equipment and user equipment as defined in the independent claims, respectively. Preferred embodiments are set forth in the dependent claims.

According to a first aspect of the present disclosure, there is provided a control method for UE, the method comprising: the UE performing communication on the basis of a master cell group (MCG) and a secondary cell group (SCG); the UE detecting whether a failure has occurred in the MCG transmission; if it is detected that a failure has occurred in the MCG transmission, executing an MCG failure processing operation; and the UE sending to a base station a message that carries or indicates information related to an MCG failure.

According to the disclosed control method, if it is detected that a failure has occurred in the MCG transmission, the UE initiates or triggers a MCG failure informing procedure relating to the UE sending a message that carries or indicates information related to an MCG failure, during an initializing or starting operation of the MCG failure informing procedure, executes the MCG failure processing operation.

According to the disclosed control method, the MCG failure processing operation includes at least one of the following operation: suspending all signaling radio bear (SRB) transmission on the MCG; suspending all data radio bear (DRB) transmission on the MCG; suspending all SRB transmission on the MCG except for SRBO; suspending split SRB transmission on the MCG; suspending all MCG SRB except for SRBO; and suspending all MCG DRB.

According to the disclosed control method, when the UE detects that a failure has occurred in the MCG transmission, or when the UE sends to a base station a message that carries or indicates information related to an MCG failure, activates a resume timer; during the running of the resume timer, if the UE detects a failure has occurred in the SCG, the UE triggers a radio resource control (RRC) connection re-establishment procedure; if the UE receives a RRC reconfiguration message, stops the running of the timer, when the running of the resume timer is time-out, the UE triggers a RRC connection re-establishment procedure.

According to the disclosed control method, wherein, the failure occurred in the MCG transmission includes at least one of the following condition: the MCG wireless connection failure; the MCG lower layer indicating integrity protection verification failure; RLC instructions of the MCG reach a maximum allowable number of transmission times or a maximum allowable number of re-transmission times; and the MCG MAC reporting a random access problem; wherein, the failure occurred in SCG includes at least one of the following condition: the SCG wireless connection failure; the SCG lowest layer indicating integrity protection verification failure; RLC instructions of the SCG reach a maximum allowable number of transmission times or a maximum allowable number of re-transmission times; and the SCG MAC indicating a random access problem.

According to the disclosed control method, when in the condition that the UE detects that a failure has occurred in the MCG transmission, if the UE is configured with a resume timer or a time period of a resume timer, the UE executes the MCG failure processing operation, sends to a base station a message that carries or indicates information related to the MCG failure, and activate the resume timer; if the LTE is not configured with a resume timer or a time period for a resume timer, the UE triggers a RRC connection re-establishment procedure.

According to the disclosed control method, after the UE sends to a base station a message that carries or indicates information related to the MCG failure, when the UE receives RRC reconfiguration message, if the UE MCG transmission is suspended, the UE executes operations of resuming SRB transmission, resuming DRB transmission and resuming split SRB transmission to respective suspended SRB on the MCG transmission, suspended DRB on the MCG transmission and suspended split SRB on the MCG transmission; if the UE MCG transmission is not suspended; the UE performs corresponding configurations based on information indicated in the RRC reconfiguration message.

According to the disclosed control method, after the UE sends to a base station a message that carries or indicates information related to the MCG failure, when the UE receives RRC reconfiguration message, if the RRC reconfiguration message is the first RRC reconfiguration message received after the UE sends to a base station a message that carries or indicates information related to the MCG failure, the UE executes RRC reconfiguration operations to respective suspended SRB on the MCG transmission, suspended DRB on the MCG transmission and suspended split SRB on the MCG transmission; if the RRC reconfiguration message is not the first RRC reconfiguration message, the UE performs corresponding configurations based on information indicated in the RRC reconfiguration message.

According to the disclosed control method, after the UE detects a failure has occurred in the MCG and before the UE receives RRC reconfiguration message, when the UE detects a failure has occurred in the SCG transmission, if the MCG transmission is suspended or a resume timer is running; the UE triggers or activates a RRC connection re-establishment procedure; if the MCG transmission is not suspended or a resume timer is stopped or not running, the UE triggers a procedure to send SCG failure information for reporting SCG failure.

According to a second aspect of the present disclosure, there is provided a user equipment, comprising: a processor; and a memory storing instructions; wherein, the instructions, when executed by the processor, cause the user equipment to carry out a control method according to disclosed control method.

### BRIEF DESCRIPTION OF THE DRAWINGS

Figure 1 is a flow chart of a control method 100 for UE according to an implementation of the present disclosure.
Figure 2 is a flow chart of a control method 200 for UE according to an implementation of the present disclosure.
Figure 3 is a schematic diagram of a UE communicating with MCG and SCG.
Figure 4 is a block diagram of a user equipment 40 according to an implementation of the present disclosure.

### DESCRIPTION

The following descriptions and accompanying drawings contain detailed descriptions of exemplary implementations of the present disclosure. It should be appreciated that the present disclosure is not limited to the implementations disclosed herein. Additionally, for the ease of understanding, the descriptions do not include detailed descriptions of general knowledge not directly related to the present disclosure in order to avoid confusion of the present disclosure.

Prior to detailed descriptions of the implementations, the following paragraphs defines the terms used in the present disclosure. Unless otherwise specified, the terms in the present disclosure contain the following meanings.
- UE: User Equipment
- NR: New Radio
- eLTE: Enhaced Long Term Evolution
- E-UTRA: Evolved Universal Terrestrial Radio Access
- DC: Dual Connectivity
- MC: Multi Connectivity
- Gnb: Base station node that provides a UE with NR user plane and control plane protocol stack and connects to the 5G core network
- Enb: Base station node that provides a UE with E-UTRAN user plane and control plane protocol stack and connects to the EPC core network
- Ng-enb: Base station node that provides a UE with E-UTRAN user plane and control plane protocol stack and connects to the 5G core network
- SRB: Signaling radio bear
- DRB: Data radio bear
- Split SRB: Split signaling radio bear
- RLC: Radio link control
- PDCP: Packet Data convergence Protocol
- MAC: Media Access Control

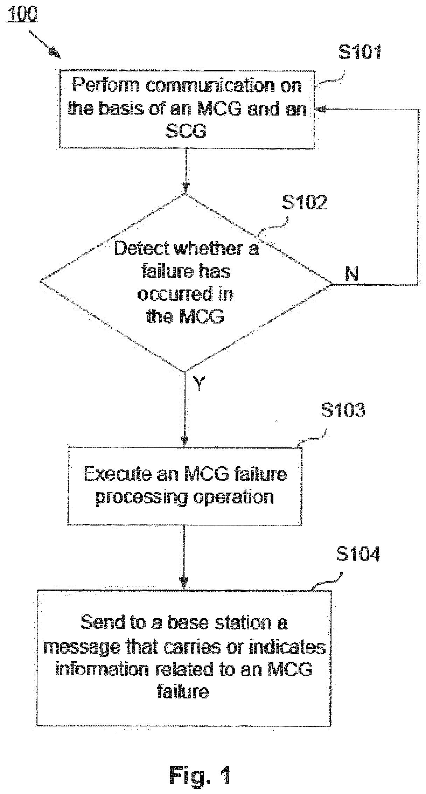

The following disclosure describes a control method for UE according to the present disclosure, and more specifically, an access control method for UE. In one example, Figure 1 is a flow chart of a control method 100 for UE according to an implementation of the present disclosure.

At step S101, the UE performs communications to a base station on the basis of a master cell group (MCG) and a secondary cell group (SCG).

At step S102, the UE detects a failure has occurred in the MCG transmission.

The failure occurred in the MCG transmission includes at least one of the following condition: the MCG wireless connection failure; the MCG lower layer indicating integrity protection verification failure; RLC instructions of the MCG reach a maximum allowable number of transmission times or a maximum allowable number of re-transmission times; and the MCG MAC reporting a random access problem.

At step S102, if it is detected that a failure has occurred in the MCG transmission, the method proceeds to step S103. At step 103, the UE executes a processing operation when a failure has occurred in the MCG, and the processing operation is called an "MCG failure processing operation."

The "MCG failure processing operation" includes at least one of the following operation: suspending all SRB transmission on the MCG; suspending all DRB transmission on the MCG; suspending all SRB transmission on the MCG except for SRBO; suspending split SRB transmission on the MCG; suspending all MCG SRB except for SRBO; and suspending all MCG DRB.

Subsequently, at step S104, the UE sends to the base station a message that carries or indicates information related to an MCG failure. More specifically, the message is transmitted via split SRB. For example, a SRB1 is configured as split SRB, and the message is sent via the SRB1.

Additionally, at step S102, when in the UE does not detect a failure has occurred in the MCG transmission, which is also when the MCG transmission has not failed, the method returns to step S101 and the UE continues to perform communication on the basis of the MCG and SCG.

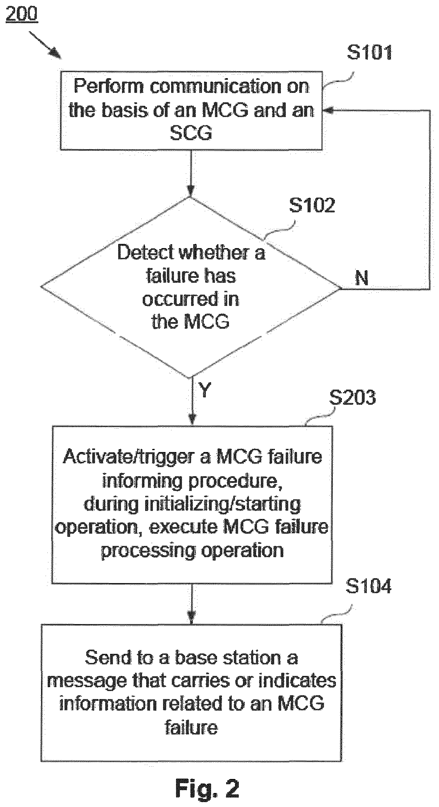

Furthermore, Figure 2 is a flow chart of a control method 200 for UE according to an implementation of the present disclosure.

The control method 200 for UE is different to the control method 100 for UE in that step S203 replaces step S103, and the other steps are the same as the disclosed control method 100. The following disclosure explains the differences in detail, and the explanations of the same steps are omitted.

At step S102, the UE detects a failure has occurred in the MCG transmission and proceeds to step S203. At step S203, the UE activates or triggers a MCG failure informing procedure, and during an initializing or starting operation of the MCG failure informing procedure, executes the MCG failure processing operation as disclosed.

The present disclosure further explains a control method for UE when the UE detects a failure has occurred in the MCG transmission and a failure has also occurred in the SCG transmission.

When the UE detects that a failure has occurred in the MCG transmission, the UE activates a resume timer. With respect to the resume timer, it may be activated when the UE detects any of the disclosed failure in the MCG. The resume timer may also be activated when the UE sends to a base station a message that carries or indicates information related to an MCG failure.

During the running of the resume timer, if the UE detects a failure occurred in the SCG, the UE triggers a RRC connection re-establishment procedure; and, if the UE receives a RRC reconfiguration message, the UE stops the running of the timer.

When the running of the resume timer is time-out, the UE triggers a RRC connection re-establishment procedure.

The failure occurred in SCG includes at least one of the following condition: the SCG wireless connection failure; the SCG lowest layer indicating integrity protection verification failure; RLC instructions of the SCG reach a maximum allowable number of transmission times or a maximum allowable number of re-transmission times; and the SCG MAC indicating a random access problem.

The following disclosure provides detailed explanations to the implementations of the present disclosure. Furthermore, as stated previously, the implementations of the present disclosure are provided as exemplary implementations for the ease of understanding. The present disclosure is not limited to the implementations disclosed herein.

### Implementation 1

Step 1: the UE detects at least one of the following failure condition in the MCG:
- the MCG wireless connection failure;
- the MCG lower layer, e.g., PDCP layer, instruction integrity protection verification failure;
- RLC instructions of the MCG reach a maximum allowable number of transmission times or a maximum allowable number of re-transmission times;
- the MCG MAC reporting a random access problem.

Step 2: the UE executes at least one of the following operations:
- suspending all SRB transmission on the MCG;
- suspending all DRB transmission on the MCG;
- suspending all SRB transmission on the MCG except for SRBO;
- suspending split SRB transmission on the MCG;
- suspending all MCG SRB except for SRBO;
- suspending all MCG DRB.

The MCG SRB refers to the signaling bear under dual connectivity or multi connectivity. The RLC and MAC logical channel configurations of the signaling bear only configure/operate in the MCG.

The MCG DRB refers to the data bear under dual connectivity or multi connectivity. The RLC and MAC logical channel configurations of the data bear only configure/operate in the MCG.

The split SRB refers to the signaling bear between the MN and the UE. The RLC and MAC logical channel configurations of the bear is configured/operated in the MCG and SCG.

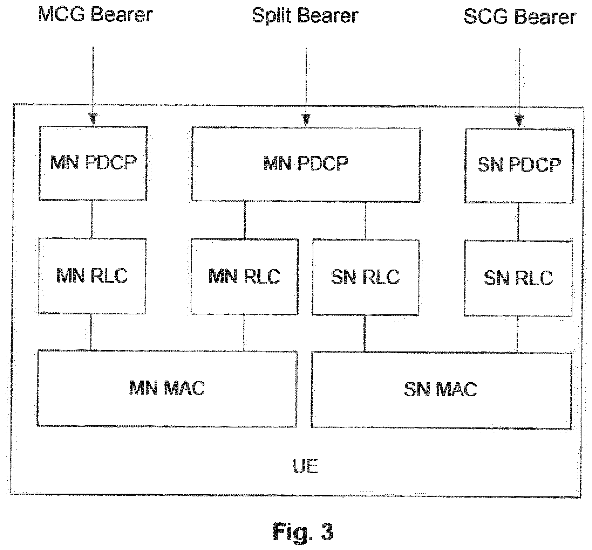

The MCG SRB, MCG DRB, split SRB are shown in Figure 3. The bearer in the figure may be a SRB or a DRB.

Moreover, suspending SRB/DRB transmission on the MCG refers to pausing/stopping SRB/DRB data receiving and sending via a MCG. If the RLC and MAC logical channel configuration for those SRB/DRB is configured in the MCG and SCG, then this type of SRB/DRB data may still be received and sent via a SCG.

Suspending split SRB transmission on the MCG refers to pausing/stopping split SRB data receiving and sending via a MCG. Since the RLC and MAC logical channel configuration for the split SRB is configured in the MCG and SCG, the data may still be received and sent via a SCG despite the transmission of such has been paused/stopped on the MCG.

Suspending SRB/DRB is different to suspending SRB/DRB transmission on the MCG. Suspending SRB/DRB refers to pausing/stopping SRB/DRB operation. The PDCP entity of SRB/DRB, the RLC entity stops generating or processing data packets and the corresponding timers are also stopped. The suspended SRB/DRB information is saved in the UE context for resuming the SRB/DRB later.

Step 3: the UE sends to a base station a message that carries or indicates information related to an MCG failure. In the message, optionally, the UE may report that at least one of the disclosed failure condition has occurred on the MCG. The message is transmitted via the split SRB in Step 2. For example, a SRB1 is configured as split SRB, and the message is sent via the SRB1.

### Implementation 2

Implementation 2 is yet another implementation of Implementation 1. The detailed implementation is disclosed subsequently.

Step 1: the UE detects at least one of the following failure condition in the MCG:
- the MCG wireless connection failure;
- the MCG lower layer indicating integrity protection verification failure;
- RLC instructions of the MCG reach a maximum allowable number of transmission times or a maximum allowable number of re-transmission times;
- the MCG MAC reporting a random access problem.

Step 2: the UE activates/triggers a procedure of sending to a base station a message that carries or indicates information related to the MCG failure.

During an initializing or starting operation of the procedure, the UE executes at least one of the following operations:
- suspending all SRB transmission on the MCG;
- suspending all DRB transmission on the MCG;
- suspending all SRB transmission on the MCG except for SRBO;
- suspending split SRB transmission on the MCG;
- suspending all MCG SRB except for SRBO;
- suspending all MCG DRB.

Step 3: the UE sends to a base station a message that carries or indicates information related to an MCG failure. In the message, optionally, the UE may report that at least one of the disclosed failure condition has occurred on the MCG. The message is transmitted via the split SRB in Step 2. For example, a SRB1 is configured as split SRB, and the message is sent via the SRB1.

### Implementation 3

The difference between Implementation 3 and Implementation 1 is that a timer is activated, which is called a resume timer in this example, when the UE detects at least one of the following failure condition in the MCG:
- the MCG wireless connection failure;
- the MCG lower layer, e.g., PDCP layer, instruction integrity protection verification failure;
- RLC instructions of the MCG reach a maximum allowable number of transmission times or a maximum allowable number of re-transmission times;
- the MCG MAC reporting a random access problem.

During the running of the resume timer, the UE triggers a RRC connection re-establishment procedure, when the UE detects at least one of the following failure condition has occurred in the SCG:
- the SCG wireless connection failure;
- the SCG lowest layer indicating integrity protection verification failure;
- RLC instructions of the SCG reach a maximum allowable number of transmission times or a maximum allowable number of re-transmission times;
- the SCG MAC indicating a random access problem.

When the running of the resume timer is time-out, the UE triggers a RRC connection re-establishment procedure.

During the running of the resume timer, if the UE receives a RRC reconfiguration message, the UE stops the running of the timer.

### Implementation 4

The difference between Implementation 4 and Implementation 3 is that the resume timer is activated when the UE sends to a base station a message that carries or indicates information related to the MCG failure.

In one example, the resume timer may be activated when the UE initiates sending to the base station the message that carries or indicates information related to the MCG failure. Additionally, the resume timer may be activated when the UE delivers to a lower layer the message that carries or indicates information related to the MCG failure. The resume timer may further be activated after the UE triggers sending to the base station the message that carries or indicates information related to the MCG failure.

During the running of the resume timer, the UE triggers a RRC connection re-establishment procedure, when the UE detects at least one of the following failure condition has occurred in the SCG:
- the SCG wireless connection failure;
- the SCG lowest layer indicating integrity protection verification failure;
- RLC instructions of the SCG reach a maximum allowable number of transmission times or a maximum allowable number of re-transmission times;
- the SCG MAC indicating a random access problem.

When the running of the resume timer is time-out, the UE triggers a RRC connection re-establishment procedure.

During the running of the resume timer, if the UE receives a RRC reconfiguration message, the UE stops the running of the timer.

### Implementation 5

Implementation 5 is a combination of Implementations 1 and 3, or a combination of Implementation 1 and 4. After Step 1 of Implementation 1, the UE does not always proceeds to Step 2 and Step 3, it may proceeds with the following steps.

Step 1: the UE detects at least one of the following failure condition in the MCG:
- the MCG wireless connection failure;
- the MCG lower layer indicating integrity protection verification failure;
- RLC instructions of the MCG reach a maximum allowable number of transmission times or a maximum allowable number of re-transmission times;
- the MCG MAC reporting a random access problem.

If the UE is configured with a resume timer or a time period of a resume timer, the UE continues executing Step 2 and Step 3 as described in Implementation 1, and activates the resume timer and performs subsequent operations as described in Implementation 3 or 4.

If the UE is not configured with a resume timer or a time period of a resume timer, the UE triggers a RRC connection re-establishment procedure.

### Implementation 6

Implementation 6 is a combination of Implementations 2 and 3, or a combination of Implementation 2 and 4. After Step 1 of Implementation 2, the UE does not always proceeds to Step 2 and Step 3, it may proceeds with the following steps.

Step 1: the UE detects at least one of the following failure condition in the MCG:
- the MCG wireless connection failure;
- the MCG lower layer indicating integrity protection verification failure;
- RLC instructions of the MCG reach a maximum allowable number of transmission times or a maximum allowable number of re-transmission times;
- the MCG MAC reporting a random access problem.

If the UE is configured with a resume timer or a time period of a resume timer, the UE continues executing Step 2 as described in Implementation 2, which is activating/trigging a procedure of sending to a base station a message that carries or indicates information related to the MCG failure, and activates the resume timer and performs subsequent operations as described in Implementation 3 or 4.

If the UE is not configured with a resume timer or a time period of a resume timer, the UE triggers a RRC connection re-establishment procedure.

### Implementation 7

After the UE sends to a base station a message that carries or indicates information related to an MCG failure, the UE may receive a RRC reconfiguration message.

When the UE receives the RRC reconfiguration message,

If the UE MCG transmission is suspended, the UE executes at least one of the following operations:

For the suspended SRB transmission on the MCG, the UE executes one or more of the following operations:
- executing a PDCP data recovery of the SRB;
- re-establishing the PDCP entity of the SRB;
- re-establishing the RLC entity of the SRB;
- resuming the suspended SRB transmission on the MCG.

For the suspended DRB transmission on the MCG, the UE executes one or more of the following operations:
- executing a PDCP data recovery of the DRB;
- re-establishing the PDCP entity of the DRB;
- re-establishing the RLC entity of the DRB;
- and/or resuming the suspended DRB transmission on the MCG.

For the suspended split SRB transmission on the MCG, the UE executes one or more of the following operations:
- executing a PDCP data recovery;
- re-establishing the PDCP entity of the split SRB;
- re-establishing the RLC entity of the split SRB;
- resuming the suspended split SRB transmission on the MCG.

Preferably, if the split SRB is SRB1, then for the suspended SRB1 transmission on the MCG, the UE executes one or more of the following operations:
- executing a PDCP data recovery of the SRB 1;
- re-establishing the PDCP entity of the SRB1;
- re-establishing the RLC entity of the SRB1;
- resuming the suspended SRB1 transmission on the MCG.

For the suspended DRB, the UE restores its PDCP status and re-establishes PDCP entity, and resume the suspended DRB.

For the suspended SRB, the UE restores its PDCP status and re-establishes PDCP entity, and resume the suspended SRB.

If the UE MCG transmission is suspended, the suspending procedure is as that disclosed in Implementation 1. That is, the UE suspends the MCG transmission before receiving the RRC reconfiguration message as disclosed in Implementation 1.

If the UE MCG transmission is not suspended, the UE performs corresponding configurations based on information in the RRC reconfiguration message.

### Variation of Implementation 7

In this a variation of Implementation 7, the UE receives a RRC reconfiguration message. If this is the first RRC reconfiguration message received after the UE sends to a base station a message that carries or indicates information related to the MCG failure as in Implementation 1, the UE, upon receiving the RRC reconfiguration message, executes at least one of the following operations:
For the suspended SRB transmission on the MCG, the UE executes one or more of the following operations:
- executing a PDCP data recovery of the SRB;
- re-establishing the PDCP entity of the SRB;
- re-establishing the RLC entity of the SRB;
- resuming the suspended SRB transmission on the MCG.

For the suspended DRB transmission on the MCG, the UE executes one or more of the following operations:
- executing a PDCP data recovery of the DRB;
- re-establishing the PDCP entity of the DRB;
- re-establishing the RLC entity of the DRB;
- resuming the suspended DRB transmission on the MCG.

For the suspended split SRB transmission on the MCG, the UE executes one or more of the following operations:
- executing a PDCP data recovery;
- re-establishing the PDCP entity of the split SRB;
- re-establishing the RLC entity of the split SRB;
- resuming the suspended split SRB transmission on the MCG.

Preferably, if the split SRB is SRB 1, then for the suspended SRB 1 transmission on the MCG, the UE executes one or more of the following operations:
- executing a PDCP data recovery of the SRB 1;
- re-establishing the PDCP entity of the SRB1;
- re-establishing the RLC entity of the SRB1;
- resuming the suspended SRB 1 transmission on the MCG.

For the suspended DRB, the UE restores its PDCP status and re-establishes PDCP entity, and resume the suspended DRB.

For the suspended SRB, the UE restores its PDCP status and re-establishes PDCP entity, and resume the suspended SRB.

If this is not the first RRC reconfiguration message received after the UE sends a message that carries or indicates information related to the MCG failure as in Implementation 1, the UE performs corresponding configurations based on information indicated in the RRC reconfiguration message.

In this implementation, the UE performs corresponding suspension operations concurrently or before the UE sends a message that carries or indicates information related to the MCG failure, therefore, as indicated in Implementations 1 and 2, the decision condition "whether the UE receives a RRC reconfiguration message after the UE sends a message that carries or indicates information related to the MCG failure" is deemed to be equivalent to the decision condition "whether the UE MCG transmission is suspended."

The PDCP data recovery procedure disclosed herein may be refer to the descriptions in 3GPP Technical Specification 38.323 Section 5.5.

### Implementation 8

After the UE detects a failure has occurred in the MCG and before the UE receives a RRC reconfiguration message, the UE may detect a failure has occurred in the SCG.

When the UE detects a failure has occurred in the SCG, the UE determines whether to perform a RRC connection re-establishment procedure or trigger a SCG failure information transmission procedure according to the MCG transmission. The detailed implementation is disclosed subsequently.

When the UE detects at least one of the following failure condition has occurred in the SCG:
- the SCG wireless connection failure;
- the SCG lowest layer indicating integrity protection verification failure;
- RLC instructions of the SCG reach a maximum allowable number of transmission times or a maximum allowable number of re-transmission times;
- the SCG MAC indicating a random access problem.

If the MCG transmission is suspended, the UE triggers/activates a RRC connection re-establishment procedure;

If the MCG transmission is not suspended, the UE triggers/activates a procedure to send SCG failure information for reporting SCG failure.

The MCG transmission operation disclosed herein is also described in Implementation 1.

### Variation of Implementation 8

In this a variation of Implementation 7, when the UE detects a failure has occurred in the SCG, the UE determines whether to perform a RRC connection re-establishment procedure or trigger a SCG failure information transmission procedure according to a resume timer. The detailed implementation is disclosed subsequently.

When the UE detects at least one of the following failure condition has occurred in the SCG:
- the SCG wireless connection failure;
- the SCG lowest layer indicating integrity protection verification failure;
- RLC instructions of the SCG reach a maximum allowable number of transmission times or a maximum allowable number of re-transmission times;
- the SCG MAC indicating a random access problem.

If the resume timer is running, the UE triggers/activates a RRC connection re-establishment procedure;
if the resume timer is not running, the UE triggers/activates a procedure to send SCG failure information for reporting SCG failure.

The MCG transmission operation disclosed herein is also described in Implementation 1.

In this implementation, the UE performs corresponding suspension operations and activates the resume timer concurrently or before the UE sends a message that carries or indicates information related to the MCG failure, therefore, as indicated in Implementations 3 and 4, the decision condition "whether the UE MCG transmission is suspended" is deemed to be equivalent to the decision condition "whether the resume timer is running."

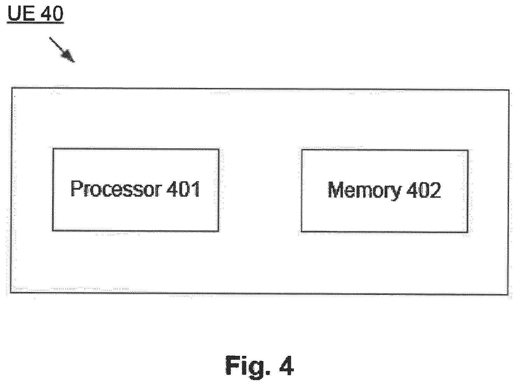

Furthermore, Figure 4 is a block diagram of a user equipment 40 according to an implementation of the present disclosure. As shown in Figure 4, the user equipment 40 comprises a processor 401 and a memory 402. The processor 401, in one example, may comprise a microprocessor, a microcontroller, an embedded processor etc. The memory 402, in one example, may comprise volatile memory (e.g., random access memory RAM), a hard disk drive (HDD), non-volatile memory (e.g., flash memory), or any other memories. The memory 402 stores program instructions. The program instructions, when executed by the processor 401, cause the user equipment to carry out the communication control methods as disclosed herein.

According to the present disclosure, executing programs stored on equipment may be implemented by controlling a Central Processor Unit (CPU) and causing a computer to realize the program functions of the present disclosure. The program or the information being processed by the program may be stored in volatile memory (e.g., random access memory (RAM)), a hard disk drive (HDD), non-volatile memory (e.g., flash memory), or any other suitable memory system.

The program that realizes functions of each implementation in the present disclosure may be stored on a computer-readable medium. Computer systems through reading the programs stored in the storage medium executes the programs to realize the corresponding functions. The "computer system" disclosed herein may be a computer system embedded in equipment, may include an operating system or hardware (e.g., peripheral equipment). A "computer-readable medium" may be a semiconductor storage medium, optical storage medium, a magnetic storage medium, a storage medium for short-term dynamic storing of programs, or any other storage medium readable by a computer.

Various characteristics or function modules used in the equipment disclosed in the implementations herein may be realized or implemented by electronics such as a monolithic or multiple-chip integrated circuit. The electronics designed for implementing the functions disclosed herein may include general processors, a digital signal processor (DSP), Applications Specific Integrated Circuitry (ASIC), Field Programmable Gate Arrays (FPGAs) or any other programmable logic devices, discrete gate or transistor logic, discrete hardware assembly, or any combination of the disclosed devices. A general processor may be a microprocessor, or any present processor, controller, microcontroller, or state machine. The disclosed electronics may be digital electronics or analog electronics. As semiconductor technology continues to improve, it is noted that there may be new integrated circuit technology replacing present integrated circuits, one or more implementations of the present disclosure may be implemented with the new integrated circuit technology.

Moreover, the present disclosure is not limited to the disclosed implementations. Although various examples are disclosed in each implementation, it should be noted that the present disclosure is not limited thereto. Fixed or non-mobile electronic equipment installed indoor or outdoor may be in a form of terminal equipment or communications equipment. For example, the electronic equipment may be Audio-Video equipment, kitchen equipment, cleaning equipment, air-conditioner, office equipment, vending machines, and other home appliances etc.

As above, the implementations of the present disclosure are disclosed in detail with reference to the accompanying drawings. However, the implementations are not limited to the disclosed implementations. The present disclosure also includes design variations, modifications and implementations suitably combining various disclosed implementations. Additionally, the disclosed implementations may have component substitutions that have similar effect.

## Claims

1. A control method for user equipment, UE (40), the control method comprising:
performing communication with a master cell group, MCG, and a secondary cell group, SCG;
detecting whether a failure has occurred in an MCG transmission;
executing an MCG failure processing operation after detecting that the failure has occurred in the MCG transmission;
sending a message to a base station, the message indicating information related to the failure; **characterised by**:
starting a resume timer upon sending the message to the base station; and
triggering the RRC connection re-establishment procedure after determining that the resume timer expires.

2. The control method according to claim 1, further comprising, if it is detected that the failure has occurred in the MCG transmission, initiating an MCG failure informing procedure of sending the message indicating the information related to the failure; and executing the MCG failure processing operation upon the initializing of the MCG failure informing procedure.

3. The control method according to claim 1, wherein the MCG failure processing operation includes at least one of the following:
suspending all signaling radio bearer, SRB, transmission via the MCG;
suspending all data radio bearer, DRB, transmission via the MCG;
suspending all SRB transmission via the MCG except for SRBO;
suspending split SRB transmission via the MCG;
suspending all MCG SRB except for SRBO; and
suspending all MCG DRB.

4. The control method according to claim 1, further comprising:
during the running of the resume timer, triggering a radio resource control, RRC, connection re-establishment procedure after determining that a failure has occurred in an SCG transmission; and
during the running of the resume timer, stopping the resume timer after determining that an RRC reconfiguration message is received.

5. The control method according to claim 4, wherein:
the failure that occurred in the MCG transmission includes at least one of the following conditions:
an MCG wireless connection failure;
an MCG lower layer indicating integrity protection check failure;
radio link control, RLC, instructions of the MCG reach a maximum allowable number of transmission times or a maximum allowable number of re-transmission times; and
an MCG medium access control, MAC, layer reporting a random access problem; and
the failure that occurred in the SCG transmission includes at least one of the following conditions:
an SCG wireless connection failure;
an SCG lower layer indicating integrity protection check failure;
RLC instructions of the SCG reach a maximum allowable number of transmission times or a maximum allowable number of re-transmission times; and
an SCG MAC layer indicating a random access problem.

6. The control method according to claim 1, wherein, if it is detected that the failure has occurred in the MCG transmission, the control method further comprises:
if the UE is configured with the resume timer or a time period of the resume timer, executing the MCG failure processing operation, sending a message to the base station that indicates information related to the failure, and starting the resume timer; and
if the UE is not configured with the resume timer or the time period for the resume timer, triggering the RRC connection re-establishment procedure.

7. The control method according to claim 1, further comprising:
sending the message to the base station, the message indicating information related to the failure;
receiving a radio resource control, RRC, reconfiguration message; and
if the MCG transmission is suspended, resuming signaling radio bearer, SRB, transmission, resuming data radio bearer, DRB, transmission and resuming split SRB transmission to corresponding suspended SRB on the MCG transmission, suspended DRB on the MCG transmission and suspended split SRB on the MCG transmission.

8. A user equipment, UE (40), comprising:
a processor (401); and
a memory (402) storing instructions, wherein, the instructions, when executed by the processor, cause the UE to:
perform communication with a master cell group, MCG, and a secondary cell group, SCG;
detect whether a failure has occurred in an MCG transmission;
execute an MCG failure processing operation after determining that the failure has occurred in the MCG transmission;
send a message to a base station, the message indicating information related to the failure; **characterised by**:
start a resume timer upon sending the message to the base station; and
trigger the RRC connection re-establishment procedure after determining that the resume timer expires.

9. The UE according to claim 8, wherein, the instructions, when executed by the processor, further cause the UE to:
if it is detected that the failure has occurred in the MCG transmission, initiate an MCG failure informing procedure of sending the message indicating the information related to the failure; and
execute the MCG failure processing operation upon the initializing of the MCG failure informing procedure.

10. The UE according to claim 8, wherein the MCG failure processing operation includes at least one of the following:
suspending all signaling radio bearer, SRB, transmission via the MCG;
suspending all data radio bearer, DRB, transmission via the MCG;
suspending all SRB transmission via the MCG except for SRBO;
suspending split SRB transmission via the MCG;
suspending all MCG SRB except for SRBO; and
suspending all MCG DRB.

11. The UE according to claim 8, wherein, the instructions, when executed by the processor, further cause the UE to:
during the running of the resume timer, , trigger a radio resource control, RRC, connection re-establishment procedure after determining that a failure has occurred in an SCG transmission; and
during the running of the resume timer, stop the resume timer after determining that an RRC reconfiguration message is received.

12. The UE according to claim 11, wherein:
the failure that occurred in the MCG transmission includes at least one of the following conditions:
an MCG wireless connection failure;
an MCG lower layer indicating integrity protection check failure;
radio link control, RLC, instructions of the MCG reach a maximum allowable number of transmission times or a maximum allowable number of re-transmission times; and
an MCG medium access control, MAC, layer reporting a random access problem; and
the failure that occurred in the SCG transmission includes at least one of the following conditions:
an SCG wireless connection failure;
an SCG lower layer indicating integrity protection check failure;
RLC instructions of the SCG reach a maximum allowable number of transmission times or a maximum allowable number of re-transmission times; and
an SCG MAC layer indicating a random access problem.

13. The UE according to claim 8, wherein, if it is detected that the failure has occurred in the MCG transmission, the instructions, when executed by the processor, further cause the UE to:
if the UE is configured with the resume timer or a time period of the resume timer, execute the MCG failure processing operation, send a message to the base station that indicates information related to the failure, and starting the resume timer; and
if the UE is not configured with the resume timer or the time period for the resume timer, trigger the RRC connection re-establishment procedure.

14. The UE according to claim 8, wherein, the instructions, when executed by the processor, further cause the UE to:
send the message to the base station, the message indicating information related to the failure;
receive a radio resource control, RRC, reconfiguration message; and
if the MCG transmission is suspended, resume signaling radio bearer, SRB, transmission, resume data radio bearer, DRB, transmission and resume split SRB transmission to corresponding suspended SRB on the MCG transmission, suspended DRB on the MCG transmission and suspended split SRB on the MCG transmission.

## Patentansprüche

1. Steuerungsverfahren für ein Benutzerendgerät, UE (40), wobei das Steuerungsverfahren umfasst:
Durchführen von Kommunikation mit einer Master-Zellgruppe, MCG, und einer Sekundär-Zellgruppe, SCG;
Detektieren, ob in einer MCG-Übertragung ein Fehler aufgetreten ist;
Durchführen eines MCG-Fehlerverarbeitungsvorgangs nach dem Detektieren, dass in der MCG-Übertragung ein Fehler aufgetreten ist;
Senden einer Nachricht an eine Basisstation, wobei die Nachrichten Informationen in Bezug auf den Fehler anzeigt,
**gekennzeichnet durch**:
Starten eines Wiederaufnahmezeitgebers bei Senden der Nachricht an die Basisstation; und
Auslösen des RRC-Verbindungswiederherstellungsvorgangs nach dem Bestimmen, dass der Wiederaufnahmezeitgeber abgelaufen ist.

2. Steuerungsverfahren nach Anspruch 1, ferner umfassend, falls detektiert wird, dass der Fehler in der MCG-Übertragung aufgetreten ist, Initiieren eines MCG-Fehlerinformationsvorgangs des Sendens der Nachricht, die die Informationen angibt, die sich auf den Fehler beziehen; und Ausführen des MCG-Fehlerverarbeitungsvorgangs bei der Initialisierung des MCG-Fehlerinformationsvorgangs.

3. Steuerungsverfahren nach Anspruch 1, wobei der MCG-Fehlerverarbeitungsvorgang mindestens eines der folgenden umfasst:
Aussetzen der gesamten Signalisierungs-Funkträger-, SRB-, Übertragung über die MCG;
Aussetzen der gesamten Daten-Funkträger-, DRB-, Übertragung über die MCG;
Aussetzen der gesamten SRB-Übertragung über die MCG mit Ausnahme von SRBO;
Aussetzen von geteilter SRB-Übertragung über die MCG;
Aussetzen der gesamten MCG SRB mit Ausnahme von SRBO; und
Aussetzen der gesamten MCG ORB.

4. Steuerungsverfahren nach Anspruch 1, ferner umfassend:
während der Wiederaufnahmezeitgeber läuft, Auslösen eines Funkressourcensteuerungs-, RRC-, Verbindungs-Wiederherstellungsvorgangs nach dem Bestimmen, dass ein Fehler in einer SCG-Übertragung aufgetreten ist; und
während der Wiederaufnahmezeitgeber läuft, Stoppen des Wiederaufnahmezeitgebers nach dem Bestimmen, dass eine RRC-Rekonfigurationsnachricht empfangen wird.

5. Steuerungsverfahren nach Anspruch 4, wobei:
der Fehler, der in der MCG-Übertragung aufgetreten ist, mindestens eine der folgenden Bedingungen umfasst:
einen MCG-Drahtlosverbindungsfehler;
eine niedrigere MCG-Schicht, die Integritätsschutz-Prüffehler anzeigt;
Radio Link Control, RLC, -Befehle der MCG erreichen eine maximal zulässige Anzahl von Übertragungszeiten oder eine maximal zulässige Anzahl an Wiederübertragungszeiten; und
eine MCG-Medienzugriffssteuerungs-, MAC-, Schicht, die ein Direktzugriffsproblem meldet; und
der Fehler, der in der SCG-Übertragung aufgetreten ist, mindestens eine der folgenden Bedingungen umfasst:
einen SCG-Drahtlosverbindungsfehler;
eine niedrigere SCG-Schicht, die Integritätsschutz-Prüffehler anzeigt;
RLC-Befehle des SCG erreichen eine maximal zulässige Anzahl von Übertragungszeiten oder eine maximal zulässige Anzahl von Wiederübertragungszeiten; und
eine SCG-MAC-Schicht, die ein Direktzugriffsproblem anzeigt.

6. Steuerungsverfahren nach Anspruch 1, wobei, wenn detektiert wird, dass der Fehler in der MCG-Übertragung aufgetreten ist, das Steuerungsverfahren ferner umfasst:
wenn die UE mit dem Wiederaufnahmezeitgeber oder eines Zeitraums des Wiederaufnahmezeitgebers konfiguriert ist, Ausführen des MCG-Fehlerverarbeitungsvorgangs, Senden einer Nachricht an die Basisstation, die Informationen in Bezug auf den Fehler angibt, und Starten des Wiederaufnahmezeitgebers; und
falls die UE nicht mit dem Wiederaufnahmezeitgeber oder dem Zeitraum für den Wiederaufnahmezeitgeber konfiguriert ist, Auslösen des RRC-Verbindungswiederherstellungsvorgangs.

7. Steuerungsverfahren nach Anspruch 1, ferner umfassend :
Senden der Nachricht an die Basisstation, wobei die Nachricht Informationen in Bezug auf den Fehler anzeigt;
Empfangen einer Funkressourcensteuerungs-, RRC-, Rekonfigurationsnachricht; und
falls die MCG-Übertragung ausgesetzt ist, Wiederaufnehmen des Signalisierungs-Funkträgers, SRB, der Übertragung, Wiederaufnehmen der Signalfunkträger-, SRB-, Übertragung, Wiederaufnehmen der geteilten SRB-Übertragung an entsprechende ausgesetzte SRB auf der MCG-Übertragung, ausgesetzter ORB auf der MCG-Übertragung und ausgesetzter geteilter SRB auf der MCG-Übertragung.

8. Nutzerausrüstung, UE (40), aufweisend:
einen Prozessor (401); und
einen Speicher (402), der Befehle speichert, wobei die Befehle, wenn sie durch den Prozessor ausgeführt werden, das UE veranlassen:
Kommunikation mit einer Master-Zellgruppe, MCG, und einer Sekundär-Zellgruppe, SCG, durchzuführen;
zu detektieren, ob ein Fehler in einer MCG-Übertragung aufgetreten ist;
einen MCG-Fehlerverarbeitungsvorgang auszuführen, nach dem Bestimmen, dass der Fehler in der MCG-Übertragung aufgetreten ist;
eine Nachricht an eine Basisstation zu senden, wobei die Nachricht Informationen bezüglich des Fehlers angibt;
**gekennzeichnet durch**:
Starten eines Wiederaufnahmezeitgebers beim Senden der Nachricht an die Basisstation; und
Auslösen des RRC-Verbindungswiederherstellungsvorgangs nach dem Bestimmen, dass der Wiederaufnahmezeitgeber abläuft.

9. UE nach Anspruch 8, wobei die Befehle, wenn sie durch den Prozessor ausgeführt werden, die UE ferner veranlassen um:
falls festgestellt wird, dass der Fehler in der MCG-Übertragung aufgetreten ist, einen MCG-Fehlerinformationsvorgang zum Senden der Nachricht zu initiieren, die Informationen angibt, die sich auf den Fehler beziehen; und
bei Initialisierung des MCG-Fehlerinformationsvorgangs den MCG-Fehlerverarbeitungsvorgang auszuführen.

10. UE nach Anspruch 8, wobei der MCG-Fehlerverarbeitungsvorgang mindestens eines der Folgenden umfasst:
Aussetzen der gesamten Signalisierungs-Funkträger-, SRB-, Übertragung über die MCG;
Aussetzen der gesamten Daten-Funkträger-, DRB-, Übertragung über die MCG;
Aussetzen der gesamten SRB-Übertragung über die MCG mit Ausnahme von SRBO;
Aussetzen von geteilter SRB-Übertragung über die MCG;
Aussetzen der gesamten MCG SRB mit Ausnahme von SRBO; und
Aussetzen der gesamten MCG ORB.

11. UE nach Anspruch 8, wobei die Anweisungen, wenn sie durch den Prozessor ausgeführt werden, die UE ferner veranlassen, zum:
während des Betriebs des Wiederaufnahmezeitgebers, Auslösen eines Funkressourcensteuerungs-, RRC-, Verbindungswiederherstellungsvorgangs nach dem Bestimmen, dass ein Fehler in einer SCG-Übertragung aufgetreten ist; und
während der Wiederaufnahmezeitgeber abläuft, Stoppen des Wiederaufnahmezeitgebers nach dem Bestimmen, dass eine RRC-Rekonfigurationsnachricht empfangen wird.

12. UE nach Anspruch 11, wobei:
der Fehler, der in der MCG-Übertragung aufgetreten ist, mindestens eine der folgenden Bedingungen umfasst:
einen MCG-Drahtlosverbindungsfehler;
eine niedrigere MCG- Schicht zeigt Integritätsschutz-Prüffehler an;
Radio Link Control, RLC, -Befehle der MCG erreichen eine maximal zulässige Anzahl von Übertragungszeiten oder eine maximal zulässige Anzahl an Wiederübertragungszeiten; und
eine MCG-Medienzugriffssteuerungs-, MAC-, Schicht, meldet ein Direktzugriffsproblem; und
der Fehler, der in der SCG-Übertragung aufgetreten ist, mindestens eine der folgenden Bedingungen umfasst:
einen SCG-Drahtlosverbindungsfehler;
eine niedrigere SCG-Schicht zeigt Integritätsschutz-Prüffehler an;
RLC-Befehle des SCG erreichen eine maximal zulässige Anzahl von Übertragungszeiten oder eine maximal zulässige Anzahl von Wiederübertragungszeiten; und
eine SCG-MAC-Schicht zeigt ein Direktzugriffsproblem an.

13. UE nach Anspruch 8, wobei, falls detektiert wird, dass der Fehler in der MCG-Übertragung aufgetreten ist, die Anweisungen, wenn sie durch den Prozessor ausgeführt werden, die UE ferner veranlassen, um:
falls die UE mit dem Wiederaufnahmezeitgeber oder einem Zeitraum des Wiederaufnahmezeitgebers konfiguriert ist, den MCG-Fehlerverarbeitungsvorgang auszuführen, eine Nachricht an die Basisstation zu senden, die Informationen in Bezug auf den Fehler angibt, und den Wiederaufnahmezeitgeber zu starten; und
wenn die UE nicht mit dem Wiederaufnahmezeitgeber oder dem Zeitraum für den Wiederaufnahmezeitgeber konfiguriert ist, Auslösen des RRC-Verbindungswiederherstellungsvorgangs.

14. UE nach Anspruch 8, wobei die Anweisungen, wenn sie durch den Prozessor ausgeführt werden, die UE ferner veranlassen zum:
Senden der Nachricht an die Basisstation, wobei die Nachricht Informationen bezüglich des Fehlers angibt;
Empfangen einer Funkressourcensteuerungs-, RRC-, Rekonfigurationsnachricht; und
falls die MCG-Übertragung ausgesetzt ist, Wiederaufnehmen der Signalisierungs-Funkträger, SRB, -Übertragung, Wiederaufnehmen der Signalisierungsfunkträger, SRB, -Übertragung, Wiederaufnehmen der Datenfunkträger, DRB, -Übertragung und Wiederaufnehmen der geteilten SRB-Übertragung an entsprechende ausgesetzte SRB auf der MCG-Übertragung, ausgesetzter DRB auf der MCG-Übertragung und ausgesetzter geteilter SRB auf der MCG-Übertragung.

## Revendications

1. Procédé de commande pour un équipement utilisateur ou UE (40), le procédé de commande comprenant :
la réalisation d'une communication avec un MCG (Master Cell Group, groupe de cellules maîtresses) et un SCG (Secondary Cell Group, groupe de cellules secondaires) ;
la détection si une défaillance a eu lieu dans une transmission de MCG ;
l'exécution d'une opération de traitement de défaillance de MCG après avoir détecté que la défaillance a eu lieu dans la transmission de MCG ;
l'envoi d'un message à une station de base, le message indiquant une information concernant la défaillance ; **caractérisé par** :
le démarrage d'un temporisateur dont l'activité a repris lors de l'envoi du message à la station de base ; et
le déclenchement du processus de rétablissement de connexion de RRC (Radio Resource Control, commande de ressource radio) après avoir déterminé que le temporisateur dont l'activité a repris expire.

2. Procédé de commande selon la revendication 1, comprenant en outre, s'il est détecté que la défaillance a eu lieu dans la transmission de MCG, le lancement d'un processus d'information de défaillance de MCG d'envoi du message indiquant l'information concernant la défaillance ; et l'exécution de l'opération de traitement de défaillance de MCG une fois le processus d'information de défaillance de MCG lancé.

3. Procédé de commande selon la revendication 1, dans lequel l'opération de traitement de défaillance de MCG comporte au moins un élément qui suit :
la suspension de toute transmission de SRB (Signaling Radio Bearer, porteuse radio de signalisation) par l'intermédiaire du MCG ;
la suspension de toute transmission de DRB (Data Radio Bearer, porteuse radio de données) par l'intermédiaire du MCG ;
la suspension de toute transmission de SRB par l'intermédiaire du MCG sauf pour SRB0 ;
la suspension de transmission de SRB divisée par l'intermédiaire du MCG ;
la suspension de toute SRB de MCG sauf pour SRB0 ; et
la suspension de toute DRB de MCG.

4. Procédé de commande selon la revendication 1, comprenant en outre
le déclenchement, au cours du fonctionnement du temporisateur dont l'activité a repris, d'un processus de rétablissement de connexion de RRC après avoir déterminé qu'une défaillance a eu lieu dans une transmission de SCG ; et
l'arrêt, au cours du fonctionnement du temporisateur dont l'activité a repris, du temporisateur dont l'activité a repris après avoir déterminé qu'un message de reconfiguration de RRC a été reçu.

5. Procédé de commande selon la revendication 4, dans lequel :
la défaillance qui a eu lieu dans la transmission de MCG comporte au moins une des conditions suivantes :
une défaillance de connexion sans fil de MCG ;
une couche inférieure de MCG indiquant une défaillance de vérification de protection d'intégrité ;
des instructions RLC (Radio Link Control, commande de lien radio) que le MCG a atteint un nombre admis maximal de temps de transmission ou un nombre admis maximal de temps de retransmission ; et
une couche MAC de MCG signalant un problème d'accès aléatoire ; et
la défaillance qui a eu lieu dans la transmission de SCG comporte au moins une des conditions suivantes :
une défaillance de connexion sans fil de SCG ;
une couche inférieure de SCG indiquant une défaillance de vérification de protection d'intégrité ;
des instructions RLC que le SCG a atteint un nombre admis maximal de temps de transmission ou un nombre admis maximal de temps de retransmission ; et
une couche MAC de SCG indiquant un problème d'accès aléatoire.

6. Procédé de commande selon la revendication 1, dans lequel, s'il est détecté que la défaillance a eu lieu dans la transmission de MCG, le procédé de commande comprend en outre :
si l'UE est configuré avec le temporisateur dont l'activité a repris ou une période de temps du temporisateur dont l'activité a repris, l'exécution de l'opération de traitement de défaillance de MCG, l'envoi d'un message à la station de base qui indique l'information concernant la défaillance, et le démarrage du temporisateur dont l'activité a repris ; et
si l'UE n'est pas configuré avec un temporisateur dont l'activité a repris ou avec la période de temps pour le temporisateur dont l'activité a repris, le déclenchement du processus de rétablissement de connexion de RRC.

7. Procédé de commande selon la revendication 1, comprenant en outre :
l'envoi du message à la station de base, le message indiquant l'information concernant la défaillance ;
la réception d'un message de reconfiguration de RRC ; et
si la transmission de MCG est suspendue, la reprise de la transmission de SRB, la reprise de la transmission de DRB et la reprise de la transmission de la SRB divisée à la SRB suspendue correspondante sur la transmission de MCG, à la DRB suspendue sur la transmission de MCG et à la SRB divisée suspendue sur la transmission de MCG.

8. Equipement utilisateur ou UE (40), comprenant :
un processeur (401) ; et
une mémoire (402) stockant des instructions, dans lequel les instructions, lorsqu'elles sont exécutées par le processeur, amènent l'UE à :
réaliser une communication avec un MCG et un SCG ;
détecter si une défaillance a eu lieu dans une transmission de MCG ;
exécuter une opération de traitement de défaillance de MCG après avoir déterminé que la défaillance a eu lieu dans la transmission de MCG ;
envoyer un message à la station de base, le message indiquant l'information concernant la défaillance ; **caractérisé par** :
le démarrage d'un temporisateur dont l'activité a repris après l'envoi du message à la station de base ; et
le déclenchement du processus de rétablissement de connexion de RRC après avoir déterminé que le temporisateur dont l'activité a repris expire.

9. UE selon la revendication 8, dans lequel les instructions lorsqu'elles sont exécutées par le processeur, amènent l'UE à :
s'il est détecté que la défaillance a eu lieu dans la transmission de MCG, lancer un processus d'information de défaillance de MCG d'envoi du message indiquant l'information concernant la défaillance ; et
l'exécution de l'opération de traitement de défaillance de MCG une fois le processus d'information de défaillance de MCG lancé.

10. UE selon la revendication 8, dans lequel l'opération de traitement de défaillance de MCG comporte au moins un élément suivant :
la suspension de toute transmission de SRB par l'intermédiaire du MCG ;
la suspension de toute transmission de DRB par l'intermédiaire du MCG ;
la suspension de toute transmission de SRB par l'intermédiaire du MCG sauf pour SRB0 ;
la suspension de transmission de SRB divisée par l'intermédiaire du MCG ;
la suspension de toute SRB de MCG sauf pour SRB0 ; et
la suspension de toute DRB de MCG.

11. UE selon la revendication 8, dans lequel les instructions, lorsqu'elles sont exécutées par le processeur, amènent en outre l'UE à :
au cours du fonctionnement du temporisateur dont l'activité a repris, déclencher un processus de rétablissement de connexion de RRC après avoir déterminé qu'une défaillance a eu lieu dans une transmission de SCG ; et
au cours du fonctionnement du temporisateur dont l'activité a repris, arrêter le temporisateur dont l'activité a repris après avoir déterminé qu'un message de reconfiguration de RRC a été reçu.

12. UE selon la revendication 11, dans lequel :
la défaillance qui a eu lieu dans la transmission de MCG comporte au moins une des conditions suivantes :
une défaillance de connexion sans fil de MCG ;
une couche inférieure de MCG indiquant une défaillance de vérification de protection d'intégrité ;
des instructions de RLC que le MCG a atteint un nombre admis maximal de temps de transmission ou un nombre admis maximal de temps de retransmission ; et
une couche MAC de MCG signalant un problème d'accès aléatoire ; et
la défaillance qui a eu lieu dans la transmission de SCG comporte au moins une des conditions suivantes :
une défaillance de connexion sans fil de SCG ;
une couche inférieure de SCG indiquant une défaillance de vérification de protection d'intégrité ;
des instructions de RLC que le SCG a atteint un nombre admis maximal de temps de transmission ou un nombre admis maximal de temps de retransmission ; et
une couche MAC de SCG indiquant un problème d'accès aléatoire.

13. UE selon la revendication 8, dans lequel s'il est détecté que la défaillance a eu lieu dans la transmission de MCG, les instructions, lorsqu'elles sont exécutées par le processeur, amènent de plus l'UE à :
si l'UE est configuré avec le temporisateur dont l'activité a repris ou une période de temps du temporisateur dont l'activité a repris, l'exécution de l'opération de traitement de défaillance de MCG, l'envoi d'un message à la station de base qui indique une information concernant la défaillance, et le démarrage du temporisateur dont l'activité a repris ; et
si l'UE n'est pas configuré avec un temporisateur dont l'activité a repris ou la période de temps pour le temporisateur dont l'activité a repris, le déclenchement du processus de rétablissement de connexion de RRC.

14. UE selon la revendication 8, dans lequel les instructions, si elles sont exécutées par le processeur, amènent de plus l'UE à :
envoyer le message à la station de base, le message indiquant une information concernant la défaillance ;
recevoir un message de reconfiguration de RRC ; et
si la transmission de MCG est suspendue, reprendre la transmission de SRB, reprendre la transmission de DRB et reprendre la transmission de SRB divisée à la SRB suspendue correspondante sur la transmission de MCG, à la DRB suspendue sur la transmission de MCG et à la SRB divisée suspendue sur la transmission de MCG.
